# EUROPEAN PATENT SPECIFICATION

(11) **EP 3 338 727 B1**
(45) Date of publication and mention of the grant of the patent: **31.01.2024**
(21) Application number: 17207407.2
(22) Date of filing: 14.12.2017
(51) Int. Cl.: A61C 1/00, A61C 1/06, A61C 1/12, A61C 19/04

(54) **ENDODONTIC HANDPIECE**
ENDODONTISCHES HANDSTÜCK
INSTRUMENT ENDODONTIQUE

(30) Priority: 21.12.2016 IT 201600129093
(43) Date of publication of application: 27.06.2018
(73) Proprietor: CEFLA SOCIETA' COOPERATIVA, 40026 Imola (BO) (IT)
(72) Inventor: Lenzi, Plinio, 40010 Sala Bolognese Bologna (IT); Zanetti, Marco, 40137 Bologna (IT); Belloni, Massimo, 40059 Medicina Bologna (IT)
(74) Representative: Karaghiosoff, Giorgio Alessandro

(56) References cited:
- EP-A1- 2 431 004
- EP-A1- 2 716 254
- US-A1- 2013 224 677
- US-A1- 2014 158 428

## Description

The present invention relates to the technical field of endodontic handpieces, intended for instrumentation of the root canals of teeth to be devitalized, and to model the endodontic space for its subsequent filling. In particular, the instant invention relates to the control of the movement of the endodontic instruments called files.

Edward Maynard (1813 - 1891) is the inventor of the first manual endodontic instrument, and is considered the father of endodontics.

Typically, when a tooth is damaged by caries, enamel and dentin can be attacked up to the pulp chamber, where blood vessels and nerves run. In this case, the dentist could not save the vitality of the tooth, and might need to devitalize the tooth, which entails blood vessels and nerves removal, and the filling of root canals and pulp chamber with an inert material, e.g. gutta-percha. On the other hand, this kind of intervention allows to keep the devitalized tooth in its place, preventing more invasive interventions, like tooth extraction and its replacement with a prosthetic tooth.

The instrument invented by Maynard was manually rotated with the aim of removing vessels and nerves from root canals, and enlarging the canals themselves in order to introduce gutta-percha cones. The dentist had to rotate in two directions the endodontic file, and then cautiously extract the removed organic debris. It is well known that there are several problems linked to tooth devitalization, one of which is the risk that the file drops from dentist's hands and ends up in patient's digestive tract; another one is the breaking of the endodontic file inside a root canal, which can have very contorted shapes. The extraction of endodontic file fragments is an extremely difficult and disagreeable operation for both endodontist and patient, which in the worst cases leads to the loss of the tooth that the endodontic therapy was trying to save.

GB1090302 of Micro Mega S.A., published in 1964, already describes the use of endodontic files mounted on mechanical handpieces, wherein the movement of rotation in both directions is performed with a speed much higher than that manually obtainable (3000 rounds per minute).

One of the problems linked to devitalization is that organic material debris can remain inside root canals, which over time can lead to dental abscesses. Therefore, the attention of manufacturers was focused on the way of ensuring that all the organic material is removed by root canals, especially on the outflow of organic material (blood vessels and nerves).

Patent US3264607 describes e.g. an apparatus for dental treatment comprising means for measuring the load imposed on a cutting tool to rotate said tool in a direction opposed to the working direction, when the load reaches a pre-defined or pre-set threshold value.

JPS57180951A is the first document describing an endodontic handpiece through which the endodontic file can be rotated alternatively in one direction and in the opposed direction, provided with an independent setting of sundry parameters, among which rotation speed and/or rotation angle for each direction of rotation.

EP1196109B1 of Dentsply describes an endodontic handpiece wherein the rotation of the file in a first direction, e.g. clockwise, is then followed by the rotation of the file in the opposed direction, e.g. anti-clockwise. The two arcs of rotation are of different lengths, and in particular the first arc of rotation is longer than the second, with the aim of facilitating the extraction of organic debris from the interested root canal.

A subsequent document, EP2438884B1 of VdW, describes with more detail the criteria for choosing arc length.

A known clinical problem is the risk of pushing an endodontic file beyond root apex, with breach of the proximal root portion and consequent complications (abscesses), which can lead to tooth loss.

In the art, the use of control devices for checking the progress of the file inside the root canal, with electronic detection of the reaching of a limit position with respect to the root apex is known. Two documents describing the detection of the root apex are e.g. EP1839619B1 and EP1839620B1 of Castellini.

EP 2431004 of Nakanishi Inc. discloses a motor control method for a dental handpiece, the dental handpiece having a motor that rotationally drives a cutting tool, the motor control method comprising: a step A of limiting a motor current flowing through the motor to a first limit current when a load torque applied to the cutting tool exceeds a pre-set limit torque value; and a step B of controlling the motor current to be equal to or lower than a second limit current, which is lower than the first limit current, when it is detected that the motor stops rotating. In this control method, the motor current is limited to the first limit current. Thereby, the rotation of the motor (the cutting tool) can be stopped (the number of rotations can be brought to 0) when the load torque applied to the cutting tool increases, and it enables to prevent the cutting tool from being broken. In addition, even when the rotation of the motor is stopped, the first limit current is still being applied to the motor, so that no torque drop (sudden decrease of the torque) occurs. When it is detected that the rotation of the motor is stopped, the motor current is controlled to be equal to or lower than the second limit current that is lower than the first limit current, so that no torque drop occurs while the load torque decreases.

EP2431004A1 relates to a motor control method for a dental handpiece provided with a motor that rotationally drives a cutting tool. The control method includes a step A of limiting the motor current to a first limit current when the load torque applied to the cutting tool exceeds a preset limit torque value, and a step B of controlling the motor current to be equal to or lower than a second limit current, which is lower than the first limit current, when it is detected that the motor stops rotating.

However, the working of endodontic handpieces as described in the quoted documents is not free from drawbacks.

The change of direction of rotation entails a rapid reversal of motion: block of rotation and immediate restart in the opposite direction. This rapid change causes a jerk of the instrument at every inversion, which is transmitted in the form of vibration to the grip of the system motor-handpiece up to operator's hand, in a measure significantly higher than the vibrations normally transmitted by an instrument rotating in a direction only.

In fact, a first drawback is linked to the impact on the musculoskeletal system of the dentist, who, being often an independent contractor, tries to adopt all the ergonomic criteria ensuring her/him a long working life.

In addition to the simple vibration inconvenience, the continuous and repeated mechanical jerks caused by motion reversal interfere with the user's perception of instrument working, until they become the prevailing perception, dulling her/his sensitivity to the progress of the working in the root canal.

In addition to causing uncertainties on the regular progress of the instrument inside the root canal, the continuous jerks cause oscillations of the instrument itself, making its working position and pressure less controllable.

A second drawback is linked to the loss of sensitivity of the dentist in using the instrument, which could lead to a break of the endodontic file.

A third drawback is linked to the mechanical fatigue of endodontic files, which are made of special superelastic alloys like nickel titanium alloy (NiTi, Nitinol), which exerts lesser straightening side forces, when the files made of this material rotate inside curved root canals. The alloy normally exist in a crystalline austenitic form, which becomes martensitic when its temperature is inside a specific temperature interval (yield). This occurs when mechanical energy is administered in a constant way (continuous rotation at a uniform speed). In this martensitic phase, the alloy expresses its superelastic quality: when mechanical stress ends, the structure rapidly goes back to its austenitic form, having a more stable but less elastic structure. Nonetheless, even NiTi endodontic file are not exempt from breaking. In fact, the sudden, rapidly repeated, change of direction of rotation is a cause of mechanical fatigue for the instrument alloy, which might invalidate the benefits of the cyclical torsion zeroing obtained through the alternated motion with respect to mono-directional motion.

A fourth drawback is the potential accumulation of organic debris at the bottom of root canal. In fact, the removal of debris during instrumentation, which occurs through the Archimedes' screw effect linked to the instrument shape, can be reduced or totally compromised because the reversal of the direction of rotation cyclically inverts also the direction of movement of debris:
- when the endodontic file rotates in the working direction, the debris removed from root canal is conveyed towards the external aperture (upwards if a lower tooth is worked on, downwards if a upper tooth is worked on);
- when the endodontic file rotates in the opposite direction, the debris is pushed toward the root end, with possible packing toward root apex, and consequent clinically bad preparation of the endodontic space.

Aim of the present invention is providing an apparatus that allow to perform an effective endodontic treatment on a patient, compromising neither the musculoskeletal system of dentist nor the metallic structure of endodontic files, with consequent risks of breakage of the file itself inside root canal.

This object is achieved by an apparatus having the features of the independent claims. Advantageous embodiment and refinements are specified in the claims dependent thereon.

Substantially, the present invention consists in controlling the oscillatory movement of the endodontic file with a sinusoidal acceleration at each change of direction. This reduces the vibrations of the instrument to an acceptable level, improving the comfort of the operation and her/his perception of the progress of the instrumentation inside the canal. In particular, using a contra angle with a low reduction ratio (4:1), accelerations and therefore vibrations are best reduced. Nonetheless, even contra angles having a different reduction ratio can be used, e.g. 6:1.

Moreover, an adaptive control is applied to the movement of the endodontic file, so that when an engagement of the file occurs inside root canal over a threshold torque value, the controlling software intervenes reducing the width of the working angle. When the engagement of endodontic file in root canal returns below the threshold value of torque, the control software intervenes resuming the rotation according to normal, non-reduced angles. When the engagement of file in root canal stays beyond the threshold value of torque, after a pre-determined number of alternated movements with reduced angle, the control software intervenes stopping the rotation, or rotating said file with a continuous rotation in the direction opposed to the working (cutting) direction.

In particular, the instant invention describes a control software of an endodontic handpiece which can be uploaded on an electronic board mounted in a dental treatment unit (dental treatment chair) which supports the patient undergoing the endodontic treatment. To the skilled man, the fact that the same concepts can be applied to a stand-alone instrument electrically supplying an endodontic handpiece is apparent, while the stand-alone apparatus can easily be shifted from a dental chair to another inside a dental practice provided with a plurality of dental treatment chairs.

In a preferred embodiment, a known system for detecting the position of the tip of the root canal with respect to the root apex is coupled to the adaptive control of the endodontic file.

The advantages linked to the present invention are numerous.

A first advantage is the elimination of the jerk transmitted to the hand gripping the instrument when the instrument changes its direction of rotation, through the modulation of the speed at each change of direction according to a sinusoidal function.

A second advantage is the reduction of vibrations transmitted to operator's hand, improving the long-term health of dentists, thanks also to the prevention of parasitic oscillation of the instrument inside root canal due to the abrupt change of direction of rotation.

The two above-described advantages lead to an improved perception and manual control by the operator during the endodontic intervention, more easily leading to clinical success.

A third advantage is the reduction of the mechanical stress and fatigue imparted to the endodontic file, reducing to a minimum instrument fatigue for abrupt and repeated inversion, causing the change of direction of rotation in a harmonic and modulated way.

A fourth advantage is linked to the removal of organic debris from root canal which occurs through different arcs of rotation, in particular a longer arc when the instrument rotates in the working direction, i.e. in the step with Archimedes' screw effect effective in removing debris toward the exterior, and a shorter arc in the opposed direction, in order to reduce the duration of opposed Archimedes' screw effect, conveying debris toward root apex.

A fifth advantage is linked to the integration of a detection system of the position of endodontic file tip with respect to root apex, detecting continuously the instant position of the file during instrumentation. The control is performed up to a predetermined threshold position, which can be set by the user, so as to prevent the risk of apex breach, and to the settings of the detecting system which can be selected by the user in case the threshold position is reached, like the automatic stop of the instrument and the rotation in the opposed direction in order to retract the file tip from the threshold position.

Further advantages and properties of the present invention are disclosed in the following description, in which exemplary embodiments of the present invention are explained in detail based on the drawings:
- Figure 1: Frontal section of a tooth;
- Figure 2: Schematic representation of an endodontic file mounted on a contra angle-micromotor assembly during an endodontic therapy;
- Figure 3: Acceleration diagram;
- Figure 4: Schematic representation of the rotation angles of the endodontic file;
- Figure 5: Diagram of torque vs. angle;
- Figure 6: Schematic representation of the control electronic circuit of the handpiece micromotor.

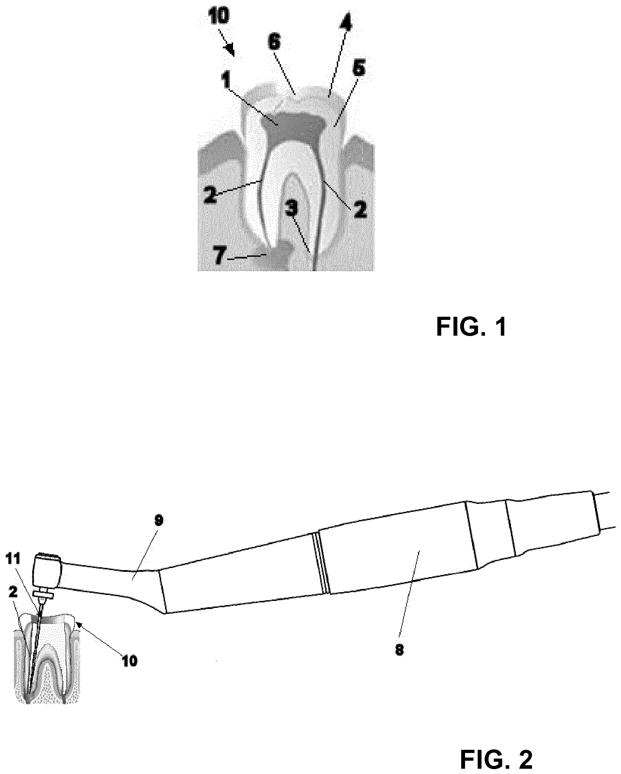

Figure 1 shows, in a schematic representation, a frontal section of a tooth 10, in particular a molar tooth. Caries attacked enamel 4 and dentin 5 producing a lesion 6. Such lesion can in some cases deepen up to pulp chamber 1, from which a plurality (in a molar four) of root canals 2 branch off, inside which blood vessel and nerves run. Each tooth root proximally has its apex 3, which is in contact with the alveolar socket or alveolus. One of the root apexes shows an apical lesion 7.

As already explained, endodontic files are inserted inside a root canal 2 with the aim of removing blood vessels and nerves, and to enlarge the canal itself in order to prepare it to the insertion of a filling material. During endodontic therapy, nonetheless, it may happen that, due to an over-instrumentation, the root apex is breached and the endodontic file comes into contact with the dental socket in an undesired way.

Figure 2 shows a micromotor 8 on which a contra angle 9 is mounted, which rotates an endodontic file 11 inside a root canal 2.

It is worth noting that the micromotor 8 normally rotates at a speed too high for direct application to file 11 during instrumentation inside root canal 2. Therefore a reduction gear is used (contra angle 9), which transmits to file 11 a movement of rotation having a speed lower than that of the micromotor.

A contra angle handpiece 4:1 transmits to the file a rotation motion reduced by four times with respect to the rounds of the micromotor: e.g., when the micromotor 8 rotates at 1000 rounds per minute, the file 11 rotates at 250 rounds per minute only. A contra angle handpiece 6:1 transmits to the file a rotation motion reduced by six times with respect to the rounds of the micromotor: e.g., when the micromotor 8 rotates at 1200 rounds per minute, the file 11 rotates at 200 rounds per minute only. In the present invention contra angle handpieces 4:1 and 6:1 are preferably used, but in alternative embodiments also contra angles having different reduction ratio can be used.

In particular, the file rotates clockwise or anti-clockwise with a first arc of rotation, and successively with a second arc of rotation in a direction opposed with respect to the first arc. In order to improve the capacity of extracting organic debris from root canal, specific angles of rotation were chosen, e.g. respectively
- 210° for the first arc (working angle, δ);
- 90° for the second arc (unloading angle,η).
Experimentally it was shown that these two arcs lead to a reduction of the organic debris remaining inside root canals, with respect to an alternated rotation with two arcs of identical length.

A very important factor for the practicality and safety of the endodontic therapy with alternated movement of the file lays in the modality of inversion of the direction of rotation. A sudden inversion causes vibrations in the instrument and in the operator's hand, reducing operator's sensitivity for the action of the file inside root canal, which potentially can lead to the breach of the apex 3 causing a iatrogenic lesion or a relapse after the intervention.

In the present invention, the inversion of rotation occurs through a gradual control of speed from zero to the working value, indicatively 500 rounds per minute. Such modulation of acceleration occurs in a constant way, so that it is lower than 2.5 *10⁹ rad/s² at burr.

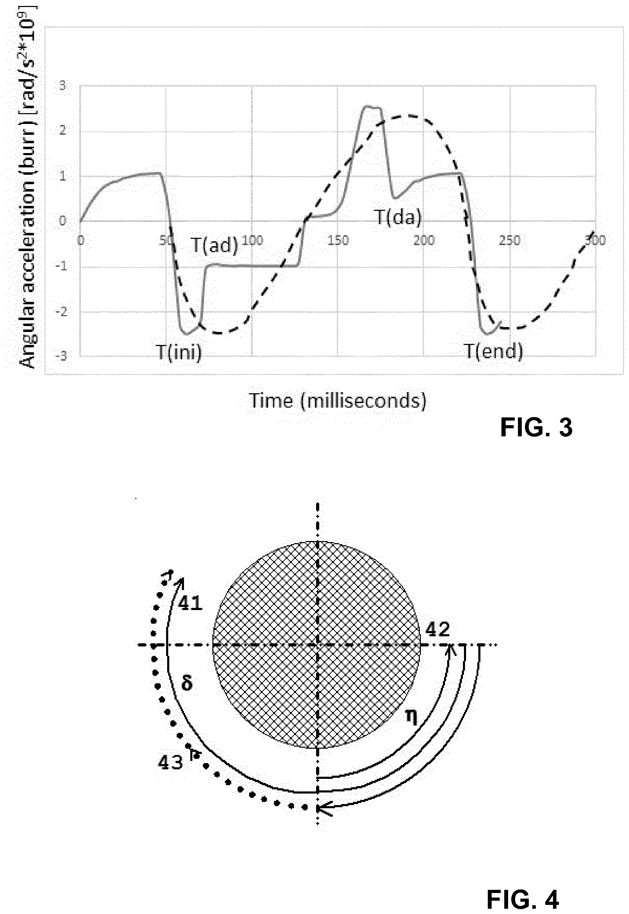

Figure 3 shows the diagram of the acceleration of the endodontic file 2. The x-coordinate is time, and the y-coordinate is the acceleration reached by the file itself. Acceleration remains constant and is equal to 1 *10⁻⁹ rad/s² at burr up to the reaching of the maximal speed, while in the deceleration phase remains lower than 2,5 * 10⁻⁹ rad/s² at burr. The cycle substantially repeats; every period of duration is indicated in Figure 3 with t(ini) and t(end). It is worth noting that the variation of acceleration in the reciprocating movement of the file occurs with a substantially sinusoid trend, and in particular with incremental or decremental steps. Between instant 0 and t(ini) there is a starting step of the device from a halt position; after the initial acceleration ramp, which has to overcome inertia, the cycle of alternate rotation starts, which at instant t(end) cyclically repeats, starting from t(ini) again.

The points of inversion of the angular momentum are indicated with t(ad) and t(da) respectively, in Figure 3.

It is worth noting that this acceleration is 4-5 times lower than state-of-the-art: this is what lies behind the diminution of vibrations.

Moreover, an adaptive movement is applied to file 11, so that when the file is engaged in the root canal over a given threshold of momentum, the controlling software intervenes reducing the width of the working angle (in the first direction) so as to prevent the excessive mechanical stress of the file, and to reduce the ensuing risks of breakage, while it leaves unvaried the unloading angle (in the opposed direction), going from a working angle/unloading angle ratio of 2,33:1 to a working angle/unloading angle ratio of 1:1.

Figure 4 shows the angle 41 of rotation in the working direction and the angle 42 in the opposed direction with continuous lines, while the reduced working angle 43 is shown with a dotted line. The working angle is reduced through the control system. As can be easily detected from the figure, the working angle 41 is equal to 210°, while the unloading angle 42 is equal to 90°. When the threshold value with respect to file fatigue is exceeded, the working angle 43 is reduced to the 90° shown with a continuous line.

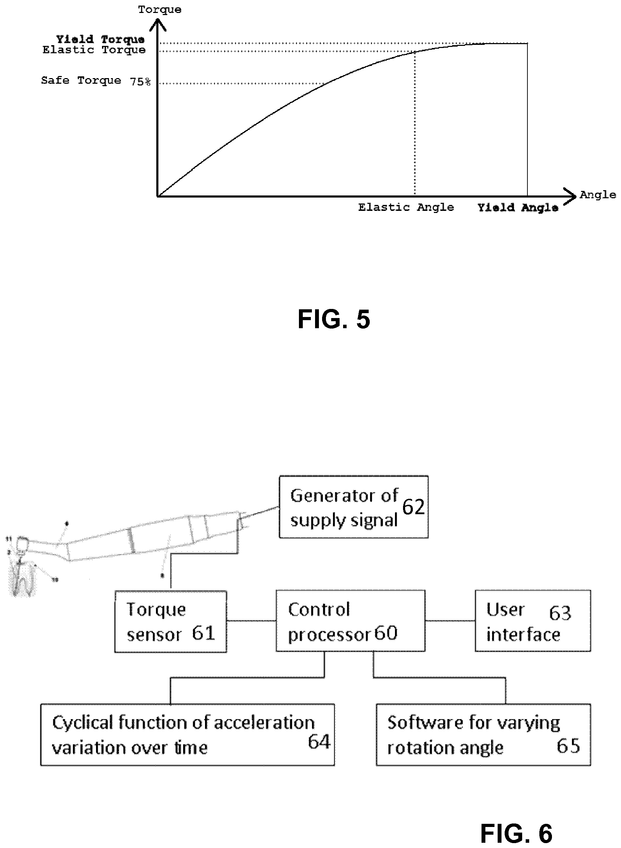

Figure 5 is a diagram relating the angle of rotation as x-coordinate to the torque on the instrument as y-coordinate: from the first step of elastic rotation at the terminal part of the line representing the yield and the breakage of the file due to an excessive load. The control system intervenes reducing the angles of rotation when at least the 75% of the torque is reached, corresponding to the beginning of the yield phase (or to the end of the elastic torsion).

The detection of load, i.e. of the torque applied by the motor to the file can be performed in different ways, e.g. providing a unit measuring the power absorbed by the motor or electrical current absorbed by motor, or other electrical parameters. Moreover, the values describing the mechanical characteristics of the different cutting tools can be set through a manual setting interface for setting said data, or through automatic means indicating the kind of file which can be read and automatically related with a database in which said data are saved and accessible by the control electronics of the endodontic handpiece. This is provided with a communication interface with the database and reading interface for acquiring the data for setting the control process of the specific file under use.

Figure 3 also shows, as an example, the shape of the sinusoid trend reproduced from the illustrated diagram.

In a preferred embodiment, the present invention comprises the application of an electronic control to the progress of the file inside the root canal with respect to a limit position set by the user with reference to the root apex. The measure of the progress of the file is performed measuring the impedance in a known way as described e.g. in EP1839619B1. In short, the apparatus comprise:
- a unit for measuring a given value V of an electrical quantity generated, in combination, by a first pole defined by the file 11 tip applied to the handpiece and positioned in the root canal 2, and a second pole defined by a reference element (not shown) positioned in patient's oral cavity and connected at the other end to the dental unit (not shown);
- a unit for processing a respective signal S sent by a measuring unit as a function of the value V of the electrical quantity in such a way as to transduce the signal S into a value H corresponding to the distance between the tip of the endodontic file 11 and the apex 3 of the root canal;
- means for detecting the distance value H, connected to the processing unit and designed to at least issue a proportional audio/video reference signal as a function of the distance H between the tip of the endodontic file 11 and the apex 3 of the root canal.

The system works with direct detection, through the file itself inside the root canal, of the position of file tip with respect to the set limit position. Acoustic signals, e.g. intermitting with a frequency increasing at the approaching to the limit position, and visual information on the instrument console accompany the progress of the file inside the root canal, and inform in real time the user about the progressive approaching of the file tip to the limit position. When the limit position is reached, the control system emits a specific acoustic signal, e.g. a continuous signal in lieu of an intermitting signal. The control system can also be set to automatically stop the rotation of the micromotor when the limit position is reached. Another optional setting is that, when the limit position is reached, in addition to stop the micromotor, the control system causes a rotation of the file in the direction opposed to the working direction, with the aim of retracting the file tip from the limit position and to distance it from root apex.

Figure 6 shows an example of the control electronic circuit of the micromotor according to Figure 2. Such example comprises in combination both the unit detecting the torque and the deriving possible limitation of the rotation angle width in the first direction of rotation, and the control unit of the acceleration according to a sinusoid function of variation of acceleration with respect to time described above. Nonetheless, it is worth noting that the two operating modes can be provided one independent from the other, and even one at a time, being the other function and the relative units not present in the system.

Figure 6 shows a version according to a combined hardware/software architecture. A central processor 60 controls a peripheral unit generating the supply signal of micromotor 62, providing the signal to cause the alternate rotation in the two directions of the micromotor, and therefore of the file, and in this case, in combination to vary the acceleration according to a sinusoid function with respect to time. To modify the angular width of rotation in the direction of penetration and cut of the file, i.e. of the first direction of rotation, a sensor 61 measuring the torque imposed by the micromotor detects this physical quantity and provides it to control processor 60. A program 65, memorized in a peripheral memory 64 of the control processor 60, provides to the control processor 60 the instructions to perform the steps of acquiring the signals of torque measurement from sensor 61, successively comparing this signal with a threshold value pre-settable e.g. through interface 63, and maintaining or modifying the width of the rotation angle in said first direction of rotation according to the outcome of said comparison, or according to the torque value measured by sensor 61.

Analogously, a program memorized in a peripheral memory 65 provides to control processor 60 the instructions to control the variation of acceleration over time according to a sinusoid function.

Alternatively, to such architecture, at least part of the unit can be of a completely electronic type, wherein a user interface is not provided, and working modes are steadily integrated in the hardware.

Using a programmable control unit allows to implement different alternative ways of controlling the motor and the file.

According to an embodiment, the system comprises a memory for storing at least a first and at least a second threshold parameter. The said parameters consisting in a first threshold value and a second threshold value for the torque value originated by the engagement of the file (11) in a root canal (2), the second threshold value being greater than the said first threshold value. The control unit being configured to causing an alternated movement of an endodontic file (11) in which the file (11) is rotated in a first direction (working angle, δ and successively in the opposed direction (unloading angle, η) with an alternated movement and reducing the working angle in said first direction when a predetermined torque value originated by the engagement of said file 11 in a root canal ) is reached which is greater than the said first threshold value and lower than the said second threshold value. The working angle in said first direction is restored when a predetermined torque value originated by the engagement of said file 11 in a root canal 2 is reached which is lower than the said first threshold value. The rotation of the motor is reversed and the motor and the file are rotated continuously in the said opposed direction (unloading angle, η) or the rotation of the file or of the motor is stopped when the measured torque value originated by the engagement of said file 11 in a root canal 2 is reached which is greater than the said second threshold value.

Alternatively, or in combination, the control unit may be configured in such a way that a counter is provided counting the step of reduction of the working angle in said first direction (working angle, δ), a threshold number of maximum steps of reductions of the said working angle being set in the control unit and the control unit being configured to reverse the direction of rotation of the motor and the file and the motor and the file being rotated continuously in the said opposed direction (unloading angle, η) or the rotation of the file or of the motor is stopped when the number of the said steps of reduction of the angle of rotation in the said first direction exceeds the said threshold.

| | | | |
|---|---|---|---|
| 1 | pulp chamber | 41 | angle in the first direction (working angle) |
| 2 | root canal | 42 | angle in opposed direction (unloading angle) |
| 3 | tooth apex | 43 | reduced working angle |
| 4 | enamel | 60 | control processor |
| 5 | dentin | 61 | torque sensor |
| 6 | coronal carious lesion | 62 | supply signal generator |
| 7 | apical lesion | 63 | user interface |
| 8 | micromotor | 64 | memory |
| 9 | contra angle | 65 | memory |
| 10 | tooth (molar) | | |
| 11 | endodontic file | | |

## Claims

1. System comprising a micromotor (8) and a contra angle (9) with alternated movement of an endodontic file (11) in a first direction (working angle, δ) and successively in the opposed direction (unloading angle, η) within an alternated movement, **characterized in that** it, comprises a control unit (60) of said micromotor rotation, generating a control signal of the acceleration of said micromotor with the shape of a sinusoid wave causing the inversion of the direction of rotation occurs with sinusoidal acceleration of the speed of rotation, from zero to the working value. and **in that**
there are provided means for detecting the resistance to rotation and/or torque of the file (11), which generate a corresponding signal, and a control unit of the actuating motion of micromotor generating a supply signal of micromotor, which control means generate a command signal of the rotation of micromotor according to the signal measuring the resistance to rotation or torque of micromotor, said means reducing the angle of rotation by a predefined quantity in one of the two direction of rotation, preferably of the first angle of rotation, when the measured value of resistance to rotation or torque exceeds a pre-determined threshold value, said means restoring the original angle of rotation when the measured value of resistance to rotation or torque return below said pre-determined threshold value.

2. System according to claim 1 comprising a memory for storing at least a first and at least a second threshold parameter, the said parameters consisting in a first threshold value and a second threshold value for the torque value originated by the engagement of the file (11) in a root canal (2), the second threshold value being greater than the said first threshold value,
the control unit being configured to causing an alternated movement of an endodontic file (11) in which the file (11) is rotated in a first direction (working angle, δ) and successively in the opposed direction (unloading angle, η) with an alternated movement and reducing the working angle by a predefined quantity in said first direction when a predetermined torque value originated by the engagement of said file (11) in a root canal (2) is reached which is greater than the said first threshold value and lower than the said second threshold value,
wherein the working angle in said first direction is restored when a predetermined torque value originated by the engagement of said file (11) in a root canal (2) is reached which is lower than the said first threshold value and
wherein the rotation of the motor is reversed and the motor and the file are rotated continuously in the said opposed direction (unloading angle, η) or the rotation of the file or of the motor is stopped when the measured torque value originated by the engagement of said file (11) in a root canal (2) is reached which is greater than the said second threshold value.

3. System according to one or more of the preceding claims 1 or 2 in which the reduction of the working angle is carrie3d out in steps of reduction and a counter is provided counting the step of reduction of the working angle in said first direction (working angle, δ), a threshold number of maximum steps of reductions of the said working angle being set in the control unit and the control unit being configured to reverse the direction of rotation of the motor and the file and the motor and the file being rotated continuously in the said opposed direction (unloading angle, η) or the rotation of the file or of the motor is stopped when the number of the said steps of reduction of the angle of rotation in the said first direction exceeds the said threshold.

4. System according to one or more of the preceding claims 1 to 3 in which the control signal of the acceleration of the said micromotor is applied to the rotation in the working direction, both during acceleration and deceleration at the end of rotation.

5. System according to one or more of the preceding claims 1 to 4 in which the sinusoidal acceleration is applied in the unloading direction.

6. System according to one or more of the preceding claims 1 to 5, **characterized in that** it comprises a detector of the position of the tip of the endodontic file (11) with respect to the root apex (3) connected to the control unit (60), the control unit (60) generating a stop of file rotation command when a predetermined position is reached.

7. System comprising a micromotor (8) and a contra angle (9) with alternated movement of an endodontic file (11) in a direction and in the opposed direction according to one or more of the preceding claims 1 to 6 wherein said control unit (60) is of electronic type, and comprises at least a generator of a supply signal of micromotor, whose at least one parameter is modified for configuring said signal as acceleration command of micromotor according to a sinusoid function with respect to time.

8. System comprising a micromotor (8) and a contra angle (9) with alternated movement of an endodontic file (11) according to one of the preceding claims 1 to 7, wherein the system is integrated in a dental treatment unit, or the system is realized in the form of a stand-alone apparatus.

## Patentansprüche

1. System umfassend einen Mikromotor (8) und ein Winkelstück (9) mit Hin- und Herbewegung einer endodontischen Feile (11) in einer ersten Richtung (Arbeitswinkel δ) und anschließend in der entgegengesetzten Richtung (Entladewinkel η) innerhalb einer Hin- und Herbewegung, **dadurch gekennzeichnet, dass** es eine Einheit (60) zur Steuerung der Drehung des Mikromotors umfasst, die ein Signal zur Steuerung der Beschleunigung des Mikromotors in Form einer Sinuswelle erzeugt, das die Umkehrung der Drehrichtung mit einer sinusförmigen Beschleunigung der Drehgeschwindigkeit von Null bis zum Arbeitswert bewirkt,
und dass
Mittel zum Erfassen des Drehwiderstands und/oder Drehmoments der Feile (11), die ein entsprechendes Signal erzeugen, und eine Einheit zur Steuerung der Betätigungsbewegung des Mikromotors, die ein Versorgungssignal des Mikromotors erzeugt, vorgesehen sind, wobei die Mittel ein Befehlssignal für die Drehung des Mikromotors gemäß dem den Drehwiderstand oder das Drehmoment des Mikromotors messenden Signal erzeugen, wobei die Mittel den Drehwinkel, vorzugsweise den ersten Drehwinkel, um einen vordefinierten Betrag in einer der beiden Drehrichtungen reduzieren, wenn der gemessene Wert des Drehwiderstands oder des Drehmoments einen vorbestimmten Schwellenwert überschreitet, wobei die Mittel den ursprünglichen Drehwinkel wiederherstellen, wenn der gemessene Wert des Drehwiderstands oder des Drehmoments unter den vorbestimmten Schwellenwert zurückkehrt.

2. System nach Anspruch 1, umfassend einen Speicher zum Speichern von mindestens einem ersten und mindestens einem zweiten Schwellenwertparameter, wobei die Parameter aus einem ersten Schwellenwert und einem zweiten Schwellenwert für den Drehmomentwert bestehen, der durch den Eingriff der Feile (11) in einem Wurzelkanal (2) erzeugt wird, wobei der zweite Schwellenwert größer als der erste Schwellenwert ist,
wobei die Steuereinheit so konfiguriert ist, dass sie eine Hinund Herbewegung einer endodontischen Feile (11) verursacht, in der die Feile (11) in eine erste Richtung (Arbeitswinkel δ) und anschließend in die entgegengesetzte Richtung (Entladewinkel ), mit einer Hin- und Herbewegung gedreht wird und dabei die Reduzierung des Arbeitswinkels um einen vordefinierten Betrag in der ersten Richtung entsteht, wenn ein vorbestimmter durch den Eingriff der Feile (11) in einen Wurzelkanal (2) erzeugter Drehmomentwert erreicht wird, der größer als der erste Schwellenwert und niedriger als der zweite Schwellwert ist,
wobei der Arbeitswinkel in der ersten Richtung wiederhergestellt wird, wenn ein vorbestimmter durch den Eingriff der Feile (11) in einen Wurzelkanal (2) erzeugter Drehmomentwert erreicht wird, der niedriger als der erste Schwellenwert ist und
wobei die Drehung des Motors umgekehrt wird und der Motor und die Feile kontinuierlich in der entgegengesetzten Richtung (Entladewinkel η) gedreht werden oder die Drehung der Feile oder des Motors gestoppt wird, wenn der gemessene durch den Eingriff der Feile (11) in einem Wurzelkanal (2) erzeugte Drehmomentwert erreicht wird, der größer als der genannte zweite Schwellenwert ist.

3. System nach einem oder mehreren der vorhergehenden Ansprüche 1 oder 2, wobei die Reduzierung des Arbeitswinkels in Reduzierungsschritten durchgeführt wird und ein den Reduzierungsschritt des Arbeitswinkels in der ersten Richtung (Arbeitswinkel δ) zählender Zähler vorgesehen ist, wobei in der Steuereinheit eine Schwellenwertanzahl maximaler Schritte zur Reduzierung des Arbeitswinkels eingestellt ist und die Steuereinheit so konfiguriert ist, dass sie die Drehrichtung des Motors und der Feile umkehrt und der Motor und die Feile kontinuierlich in der entgegengesetzten Richtung (Entladewinkel η) gedreht werden oder die Drehung der Feile oder des Motors gestoppt wird, wenn die Anzahl der besagten Schritte zur Reduzierung des Drehwinkels in der besagten ersten Richtung den besagten Schwellenwert überschreitet.

4. System nach einem oder mehreren der vorhergehenden Ansprüche 1 bis 3, wobei das Steuersignal der Beschleunigung des Mikromotors auf die Drehung in Arbeitsrichtung sowohl während der Beschleunigung als auch bei der Verzögerung am Ende der Drehung angewendet wird.

5. System nach einem oder mehreren der vorhergehenden Ansprüche 1 bis 4, wobei die sinusförmige Beschleunigung in Entladerichtung angewendet wird.

6. System nach einem oder mehreren der vorhergehenden Ansprüche 1 bis 5, **dadurch gekennzeichnet, dass** es einen mit der Steuereinheit (60) verbundenen Detektor der Position der Spitze der endodontischen Feile (11) in Bezug auf die Wurzelspitze (3) umfasst, wobei die Steuereinheit (60) einen Befehl zum Stoppen der Feilendrehung erzeugt, wenn eine vorbestimmte Position erreicht ist.

7. System umfassend einen Mikromotor (8) und ein Winkelstück (9) mit Hin- und Herbewegung einer endodontischen Feile (11) in eine Richtung und in die entgegengesetzte Richtung nach einem oder mehreren der vorhergehenden Ansprüche 1 bis 6, wobei die Steuereinheit ( 60) vom elektronischen Typ ist und mindestens einen Generator eines Versorgungssignals des Mikromotors umfasst, dessen mindestens ein Parameter geändert wird, um das Signal als Beschleunigungsbefehl des Mikromotors gemäß einer Sinusfunktion in Bezug auf die Zeit zu konfigurieren.

8. System umfassend einen Mikromotor (8) und ein Winkelstück (9) mit Hin- und Herbewegung einer endodontischen Feile (11) nach einem der vorhergehenden Ansprüche 1 bis 7, wobei das System in eine zahnärztliche Behandlungseinheit integriert bzw. als eigenständiges Gerät realisiert ist.

## Revendications

1. Système comprenant un micromoteur (8) et un contre-angle (9) à mouvement alterné d'une lime endodontique (11) dans un premier sens (angle de travail, δ) et successivement dans le sens opposé (angle de déchargement, η) dans un mouvement alterné, **caractérisé en ce qu'**il comprend une unité de commande (60) de la rotation dudit micromoteur, générant un signal de commande de l'accélération dudit micromoteur sous la forme d'une onde sinusoïdale provoquant l'inversion du sens de rotation, l'inversion du sens de rotation se produit avec une accélération sinusoïdale de la vitesse de rotation allant de zéro à la valeur de travail, et **en ce que**
sont prévus des moyens de détection de la résistance à la rotation et/ou du couple de la lime (11), qui génèrent un signal correspondant, et une unité de commande du mouvement d'actionnement du micromoteur générant un signal d'alimentation du micromoteur, lesquels moyens de commande génèrent un signal de commande de la rotation du micromoteur en fonction du signal mesurant la résistance à la rotation ou le couple du micromoteur, lesdits moyens réduisant l'angle de rotation d'une valeur prédéfinie dans l'une des deux sens de rotation, de préférence du premier angle de rotation, lorsque la valeur mesurée de résistance à la rotation ou du couple dépasse une valeur seuil prédéterminée, lesdits moyens rétablissant l'angle de rotation d'origine lorsque la valeur mesurée de résistance à la rotation ou du couple redevient inférieure à ladite valeur seuil prédéterminée.

2. Système selon la revendication 1, comprenant une mémoire pour stocker au moins un premier et au moins un second paramètre seuil, lesdits paramètres consistant en une première valeur seuil et en une seconde valeur seuil pour la valeur de couple générée par l'engagement de la lime (11) dans un canal radiculaire (2), la seconde valeur seuil étant supérieure à ladite première valeur seuil,
l'unité de commande étant configurée pour provoquer un mouvement alterné d'une lime endodontique (11) dans lequel la lime (11) tourne dans un premier sens (angle de travail, δ) et successivement dans le sens opposé (angle de déchargement, η) avec un mouvement alterné et réduisant l'angle de travail d'une valeur prédéfinie dans ledit premier sens lorsque une valeur prédéterminée de couple générée par l'engagement de ladite lime (11) dans un canal radiculaire (2) est atteinte, qui est supérieure à ladite première valeur seuil et inférieure à ladite second valeur seuil,
dans lequel l'angle de travail dans ledit premier sens est rétabli lorsqu'une valeur prédéterminée de couple générée par l'engagement de ladite lime (11) dans un canal radiculaire (2) est atteinte, laquelle valeur est inférieure à ladite première valeur seuil et
dans lequel la rotation du moteur est inversée et le moteur et la lime tournent continuellement dans ledit sens opposé (angle de déchargement, η) ou la rotation de la lime ou du moteur est interrompue lorsque la valeur de couple mesurée et générée par l'engagement de ladite lime (11) dans un canal radiculaire (2) est atteinte, laquelle valeur est supérieure à ladite seconde valeur seuil.

3. Système selon l'une ou plusieurs des revendications précédentes 1 ou 2, dans lequel la réduction de l'angle de travail s'effectue en étapes de réduction et un compteur est prévu, comptant le étape de réduction de l'angle de travail dans ledit premier sens (angle de travail, δ), un nombre seuil d'un maximum d'étapes de réduction dudit angle de travail étant fixé dans l'unité de commande et l'unité de commande étant configurée pour inverser le sens de rotation du moteur et de la lime et le moteur et la lime tournant continuellement dans ledit sens opposée (angle de déchargement, η) ou la rotation de la lime ou du moteur est interrompue lorsque le nombre desdites étapes de réduction de l'angle de rotation dans ledit premier sens dépasse ledit seuil.

4. Système selon l'une ou plusieurs des revendications précédentes 1 à 3, dans lequel le signal de commande de l'accélération dudit micromoteur est appliqué à la rotation dans le sens de travail, à la fois pendant l'accélération et pendant la décélération en fin de rotation.

5. Système selon l'une ou plusieurs des revendications précédentes 1 à 4,
dans lequel l'accélération sinusoïdale est appliquée dans le sens de déchargement.

6. Système selon l'une ou plusieurs des revendications précédentes 1 à 5,
**caractérisé en ce qu'**il comprend un détecteur de la position de la pointe de la lime endodontique (11) par rapport à l'apex radiculaire (3) connecté à l'unité de commande (60), l'unité de commande (60) générant une commande d'arrêt de la rotation de la lime lorsqu'une position prédéterminée est atteinte.

7. Système comprenant un micromoteur (8) et un contre-angle (9) à mouvement alterné d'une lime endodontique (11) dans un sens et dans le sens opposé selon l'une ou plusieurs des revendications précédentes 1 à 6,
dans lequel ladite unité de commande est de type électronique et comprend au moins un générateur d'un signal d'alimentation du micromoteur, dont au moins un paramètre est modifié pour configurer ledit signal en tant que commande d'accélération du micromoteur selon une fonction sinusoïdale par rapport au temps.

8. Système comprenant un micromoteur (8) et un contre-angle (9) à mouvement alterné d'une lime endodontique (11) selon l'une des revendications précédentes 1 à 7,
dans lequel le système est intégré dans une unité de traitement dentaire, ou le système est réalisé sous la forme d'un appareil autonome.
